# EUROPÄISCHE PATENTANMELDUNG

(11) **EP 0 822 050 A1**
(43) Veröffentlichungstag der Anmeldung: **04.02.1998**
(21) Anmeldenummer: 97112830.1
(22) Anmeldetag: 25.07.1997
(51) Int. Cl.: B29C 45/64, B29C 45/03

(54) **Spritzgiessmaschine**

(30) Priorität: 26.07.1996 AT 438/96 U
(71) Anmelder: ENGEL MASCHINENBAU GESELLSCHAFT MBH, A-4311 Schwertberg (AT)
(72) Erfinder: Urbanek, Otto, 4020 Linz (AT)
(74) Vertreter: Torggler, Paul Norbert

(57) **Zusammenfassung**

Spritzgießmaschine mit einem ortsfesten Maschinenrahmen, welcher eine Formhälfte unverschieblich trägt, und mit einem gegenüber dem Maschinenrahmen verfahrbaren Träger für die zweite Formhälfte, wobei dieser Träger wenigstens einen Fortsatz aufweist, der beim Schließen der Form unterhalb der unverschieblichen Formhälfte eingeschoben wird, woraufhin die Formhälften durch eine Einrichtung zur Erzeugung des Schließdruckes zusammengepreßt werden, wobei die Einrichtung zur Erzeugung des Schließdruckes ausschließlich an den unter den Formhälften (2,12) verlaufenden Fortsätzen (4,14) des Trägers (13) angreift.

## Beschreibung

Die Erfindung bezieht sich auf eine Spritzgießmaschine mit einem ortsfesten Maschinenrahmen, welcher eine Formhälfte unverschieblich trägt, und mit einem gegenüber dem Maschinenrahmen verfahrbaren Träger für die zweite Formhälfte, wobei dieser Träger wenigstens einen Fortsatz aufweist, der beim Schließen der Form unterhalb der unverschieblichen Formhälfte eingeschoben wird, woraufhin die Formhälften durch eine Einrichtung zur Erzeugung des Schließdruckes zusammengepreßt werden.

Wird bei einer derartigen Einrichtung die Schließkraft von einem C-förmigen Maschinenrahmen aufgenommen, bei dem die nach oben weisenden Rahmenschenkel nicht durch Holme verbunden sind (vgl DE 93 21 041 U), so kommt es zu Verformungen des Rahmens. Auch wenn diese Verformungen kompensiert werden, indem man es der verfahrbaren Formhälfte erlaubt, Verschwenkungen der unverschieblichen Formhälfte mitzumachen, oder indem beide Formaufspannplatten gelenkig gelagert werden, ist es sinnvoll, einen derartigen C-Rahmen möglichst kurz zu machen. Nur so können Aufwölbungen des horizontalen Mittelsteges des Rahmens unter dem Einfluß der Schließkraft ohne erheblichen Materialaufwand gering gehalten werden.

Bei der Lösung des Problems geht die Erfindung von der Überlegung aus, daß die Länge herkömmlicher C-Rahmen wesentlich dadurch bedingt ist, daß die Schließkraft aufgebracht wird, indem eine entsprechende Einrichtung Druck auf die Rückseite des Trägers der verfahrbaren Formhälfte aufbringt. Diese Einrichtung (beispielsweise ein Hydraulikzylinder oder eine Kniehebelanordnung) weist nicht nur eine bestimmte Mindestlänge auf, sondern muß zusätzlich um den Öffnungsweg der Form ausfahrbar sein. Durch die Abstützung der Einrichtung zur Erzeugung der Schließkraft an einem Schenke, der, sogenannten Zylinderplatte, des C-Rahmens wird der Maschinenrahmen insgesamt sehr lang.

Die Erfindung führt zu einer wesentlichen Verkürzung des Maschinenrahmens, indem vorgesehen wird, daß die Einrichtung zur Erzeugung des Schließdruckes ausschließlich an den unter den Formhälften verlaufenden Fortsätzen des Trägers angreift.

Bei einer erfindungsgemäßen Einrichtung übernimmt der die unverschiebbare Formhälfte tragende Teil des Rahmens die Funktion der Zylinderplatte. Eine erfindungsgemäße Einrichtung weist damit Ähnlichkeit mit einer Zwei-Platten-Maschine auf (vgl. AT-B 378 500), wobei allerdings die oberen Holme weggelassen sind. Da solche Holme eine Funktion haben, wird ein solches Weglassen im allgemeinen nicht ohne kompensierende Maßnahmen möglich sein. Beispielsweise kann daher in Ausgestaltung des erfinderischen Grundgedankens vorgesehen werden, daß mindestens eine der die Formhälften tragenden Formaufspannplatten um horizontale Achsen schwenkbar gelagert ist. Begnügt man sich damit, die beim Aufbringen der Schließkraft erfolgende Verschwenkung und Verbiegung der die Formhälften tragenden Maschinenteile durch eine entgegengesetzt gerichtete Verschwenkung zu kompensieren, so können beide Formaufspannplatten starr am Rahmen befestigt bleiben. Der Maschinenrahmen hat in diesem Falle nicht die Form eines liegenden C, sondern eines liegenden I. Die aufgrund der Schließkraft erfolgende Spreizung der oberen Rahmenteile wird durch eine Spreizung der unteren Rahmenschenkel kompensiert, wo dies an sich aus AT-B 361 220 bekannt ist.

Weitere Einzelheiten der Erfindung werden anschließend anhand der Zeichnung erläutert. In dieser ist

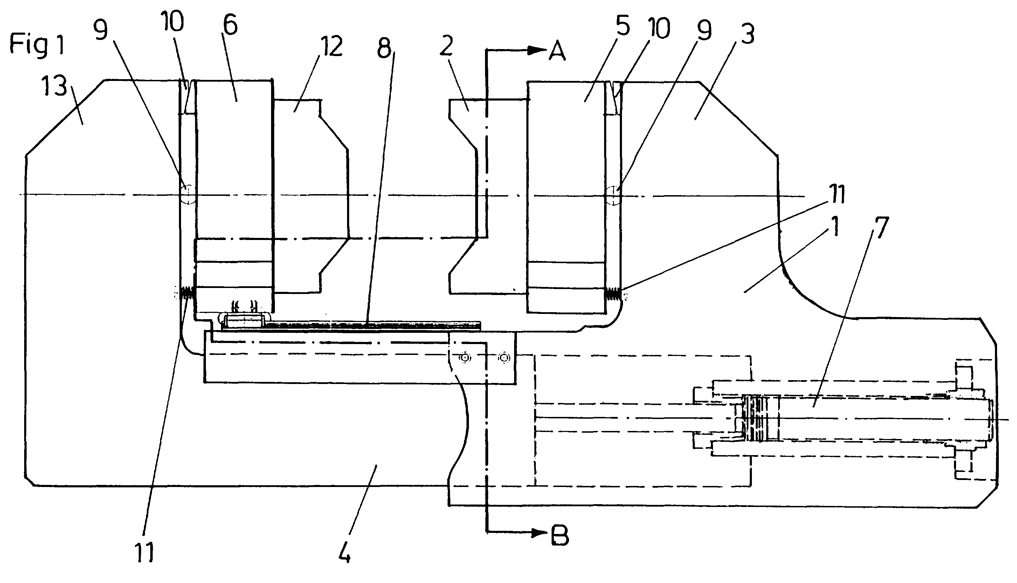

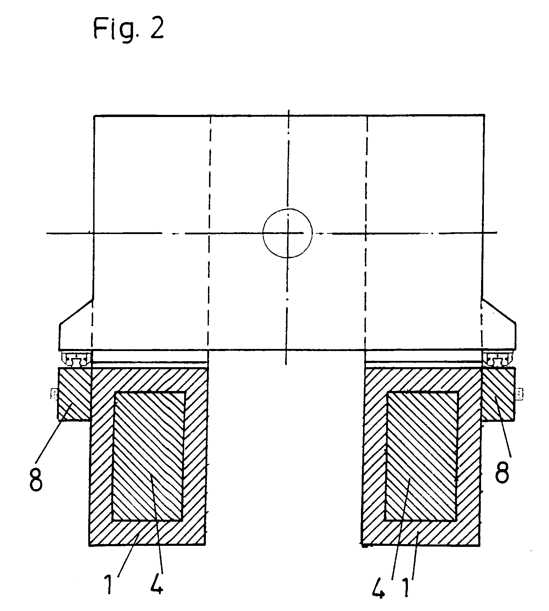

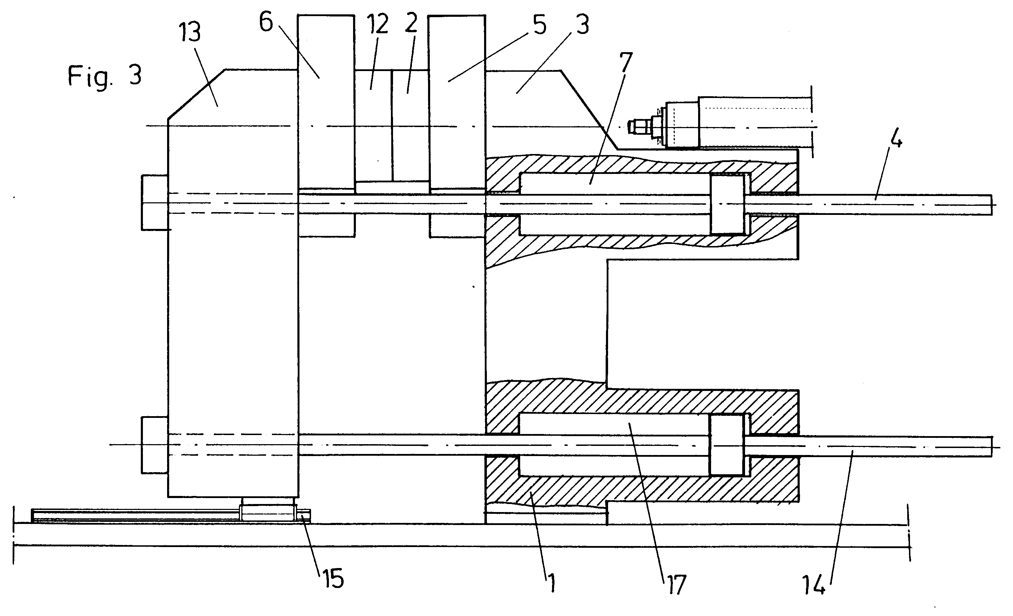

Fig. 1 eine schematische Seitenansicht eines ersten Ausführungsbeispiels der Erfindung, Fig. 2 ein Schnitt nach der Linie A-B in Fig. 1, und Fig. 3 die Seitenansicht eines zweiten Ausführungsbeispieles.

Die in Fig. 1 und 2 dargestellte Spritzgießeinrichtung weist einen feststehenden Maschinenrahmen 1 auf, welcher mittels einer Formaufspannplatte 5 die feststehende Formhälfte 2 trägt. Die korrespondierende bewegliche Formhälfte 12 ist mittels der Formaufspannplatte 6 an einem Träger 13 gelagert. Dieser Träger 13 ist mit einem Fortsatz 4 versehen, welcher in einer korrespondierenden Ausnehmung des Maschinenrahmens 1 verfahrbar ist, wobei die Formaufspannplatte 6 auf einer Schiene 8 des Rahmens 1 gleitet. Im dargestellten Fall erfolgt diese Bewegung durch einen Hydraulikzylinder 7, welcher auch die Schließkraft aufbringt. Die Erfindung ist jedoch nicht auf eine hydraulische Einrichtung zur Erzeugung des Eil- bzw. Krafthubes beschränkt.

Wenn der Zylinder 7 die Schließkraft zwischen den Formhälften 2, 12 aufbringt, verschwenken sich die Träger 3 und 13 für die Formhälften 2, 12 nach außen, und zwar einerseits dadurch, daß sich der oder die Fortsätze 4 im Bereich zwischen den Trägern 3, 13 aufwölben, andererseits dadurch, daß eine gewisse Verbiegung der Träger 3, 13 stattfindet. Um zu verhindern, daß die Formhälften 2, 12 die Bewegung der Träger 3, 13 mitmachen, werden beim Ausführungsbeispiel nach Fig. 1 die Formaufspannplatten 5, 6 jeweils an Gelenken 9 mit horizontaler Drehachse gelagert. Die Bewegung um diese Gelenke wird einerseits durch Anschläge 10, andererseits durch Federn 11 begrenzt.

Beim Ausführungsbeispiel nach Fig. 3 sind die Formaufspannplatten 5, 6, welche die Formhälften 2, 12 tragen, unmittelbar am festen Träger 3 des Maschinenrahmens 1 und am beweglichen Träger 13 befestigt. Der bewegliche Träger 13 ist auf der Schiene 15 des Maschinenrahmens 1 verfahrbar, wenn die mit dem Träger 13 fest verbundenen Fortsätze 4 und 14 mittels der Schließzylinder 7 und 17 aus- und eingefahren werden. Beim Öffnen und Schließen der Form werden die Zylinder 7 und 17 gleichsinnig betätigt, zum Aufbringen der Schließkraft hingegen wird in den linken Zylinderraum des Schließzylinders 7 Hydraulikflüssigkeit eingepreßt, was ohne Gegenmaßnahmen zu einem Aufklaffen der Formhälften 2, 12 führen könnte. Um diesem entgegenzuwirken, wird gleichzeitig mit dem Aufbringen des Schließdruckes der untere Fortsatz 14, welcher mit dem Träger 13 fest verbunden ist, unter Druck gesetzt, bis die Berührungsflächen der Formhälften 2 und 12 wieder parallel verlaufen.

## Patentansprüche

1. Spritzgießmaschine mit einem ortsfesten Maschinenrahmen, welcher eine Formhälfte unverschieblich trägt, und mit einem gegenüber dem Maschinenrahmen verfahrbaren Träger für die zweite Formhälfte, wobei dieser Träger wenigstens einen Fortsatz aufweist, der beim Schließen der Form unterhalb der unverschieblichen Formhälfte eingeschoben wird, woraufhin die Formhälften durch eine Einrichtung zur Erzeugung des Schließdruckes zusammengepreßt werden, dadurch gekennzeichnet, daß die Einrichtung zur Erzeugung des Schließdruckes ausschließlich an den unter den Formhälften (2,12) verlaufenden Fortsätzen (4,14) des Trägers (13) angreift.

2. Spritzgießmaschine nach Anspruch 1, dadurch gekennzeichnet, daß mindestens eine der die Formhälften (2,12) tragenden Formaufspannplatten (5,6) um horizontale Achsen (9) schwenkbar gelagert ist.

3. Spritzgießmaschine nach Anspruch 1 oder 2, dadurch gekennzeichnet, daß der Träger (13) zwei übereinander angeordnete Fortsätze bzw. Gruppen von Fortsätzen (14) aufweist, wobei die unteren Fortsätze (14) während der Aufbringung des Schließdruckes auf Druck beansprucht sind.
